# EUROPÄISCHE PATENTSCHRIFT

(11) **EP 4 454 466 B1**
(45) Veröffentlichungstag und Bekanntmachung des Hinweises auf die Patenterteilung: **28.01.2026**
(21) Anmeldenummer: 23170395.0
(22) Anmeldetag: 27.04.2023
(51) Int. Cl.: A22C 11/04, A22C 11/08

(54) **SCHNEIDVENTIL-EINHEIT ZUM PORTIONIEREN EINER PASTÖSEN PRODUKTMASSE**
CUTTING VALVE UNIT FOR PORTIONING A PASTY PRODUCT MASS
UNITÉ DE SOUPAPE DE COUPE POUR DOSER UNE MASSE DE PRODUIT PÂTEUX

(43) Veröffentlichungstag der Anmeldung: 30.10.2024
(73) Patentinhaber: Albert Handtmann Maschinenfabrik GmbH & Co. KG, 88400 Biberach (DE)
(72) Erfinder: NEHM, Johanna, 89077 Ulm (DE); ENDER, Simon, 89604 Allmendingen (DE); ÖFNER, Werner, 88430 Rot an der Rot-Mühlberg (DE); TEUFEL, Daniel, 88433 Schemmerhofen (DE); NUSSER, Marcel, 88471 Laupheim (DE); KNIELE, Johannes, 88422 Betzenweiler (DE); WEIDELENER, Oliver, 88422 Alleshausen (DE)
(74) Vertreter: Grünecker Patent- und Rechtsanwälte PartG mbB

(56) Entgegenhaltungen:
- EP-A1- 2 215 912
- EP-A1- 3 832 179
- DE-U1- 202011 000 207
- US-A- 4 565 054
- US-A- 5 035 671

## Beschreibung

Die Erfindung betrifft eine Schneidventil-Einheit zum Portionieren von pumpfähigen pastösen bis flüssigen Produktmassen gemäß dem Oberbegriff des Anspruchs 1.

Eine Schneidventil-Einheit gemäß dem Oberbegriff des Anspruchs 1 ist aus der EP 2 215 912 B1 bekannt. Diese eignet sich besonders für Produktmassen mit stückiger oder faseriger Konsistenz, wie beispielsweise Wurst- oder Schinkenmasse. Um diese vorteilhaft zu portionieren, wird ein Ausstoßkolben mit einer stirnseitigen Schneidkante im Inneren eines Füllrohrs über einen seitlich darin ausgebildeten Einlass für einen Massestrang des Produkts geführt. Dieser Hubbewegung des Ausstoßkolbens wird dabei eine Drehbewegung überlagert, sodass sich die Schneidkante beim Abteilen einer Portion vom Massestrang entlang einer Schraubenlinie über den Einlass bewegt und dabei einen im Prinzip bekannten gezogenen Schnitt auszuführt.

Die Hubbewegung wird mittels eines Linearantriebs erzeugt und an den Ausstoßkolben mittels eines Getriebes übertragen, welches dabei die Drehbewegung erzwingt. Das Getriebe ist bei der EP 2 215 912 B1 in Form einer Kulissenführung ausgebildet und zwischen dem Ausstoßkolben und dem Füllrohr oder zwischen dem Ausstoßkolben und dem Linearantrieb angeordnet. Am Ausstoßkolben oder einem damit drehfest verbundenen Stößel sind dann beispielsweise radial überstehende Nocken ausgebildet, die in eine schraubenlinienförmig am stationären Füllrohr ausgebildete Führungsnut eingreift. Beim Linearantrieb handelt es sich beispielsweise um einen Druckluft- oder Hydraulikzylinder oder um einen elektromechanischen Spindelantrieb, der dem Ausstoßkolben individuell zugeordnet ist und mit diesem über eine Kolbenstange verbunden ist.

Eine solche Kulissenführung ist jedoch relativ aufwändig herzustellen und erfordert zudem einen komplexen Aufbau des Füllrohrs, beispielsweise indem die Führungsnuten der Kulissenführung in einer separaten Führungshülse ausgebildet werden, die in das Füllrohr eingesetzt wird. Zudem ermöglicht die Kulissenführung nur Schraubenlinien mit relativ großer Steigung und somit geringer Drehung des Ausstoßkolbens und ist vergleichsweise anfällig für Materialverschleiß.

Es besteht daher Bedarf für demgegenüber verbesserte Schneidventil-Einheiten.

Die gestellte Aufgabe wird mit einer Schneidventil-Einheit gemäß Anspruch 1 gelöst. Bevorzugte Ausführungsformen sind u. a. Gegenstand der Unteransprüche.

Die Schneidventil-Einheit eignet sich zum Portionieren von pumpfähigen pastösen bis flüssigen Produktmassen mit insbesondere stückiger oder faseriger Konsistenz, wie beispielsweise Wurst- oder Schinkenmasse, Bäckereiprodukte, Molkereiprodukte, Feinkostprodukte, Fleischersatzprodukte und/oder Tiernahrung.

Die Schneidventil-Einheit umfasst hierzu ein Schneidventil und insbesondere wenigstens zwei Schneidventile jeweils mit einem Füllrohr, in dem ein seitlicher Einlass für einen Massestrang der Produktmasse ausgebildet ist, und mit einem Ausstoßkolben, der durch eine oszillierende Hubbewegung im Füllrohr wiederholt über den Einlass geführt werden kann, um je eine Portion der Produktmasse vom Massestrang abzuteilen und anschließend auszustoßen. Die Schneidventileinheit umfasst ferner einen Linearantrieb zum Erzeugen der Hubbewegung des Ausstoßkolbens und ein dem Schneidventil jeweils zugeordnetes Getriebe, das dazu ausgebildet ist, die Hubbewegung zu übertragen und dieser eine Drehbewegung des Ausstoßkolbens zu überlagen.

Erfindungsgemäß ist das Getriebe ein Spindelgetriebe umfassend eine Gewindespindel. Diese ist mit dem Ausstoßkolben sowohl drehfest als auch translatorisch festgelegt verbunden. Ferner ist die Gewindespindel mit dem Linearantrieb zum einen drehbar und zum anderen translatorisch festgelegt verbunden. Der Begriff "translatorisch" ist hier und nachfolgend im Sinne von axial (bezogen auf die Gewindespindel) bzw. in Richtung der Hubbewegung zu verstehen.

Die Gewindespindel hat somit die Funktion einer Kolbenstange, welche die linear oszillierende Hubbewegung des Linearantriebs und die mit dem Spindelgetriebe erzeugte Drehbewegung gleichzeitig an den Ausstoßkolben überträgt. Die Gewindespindel kann auf apparativ einfache Weise mit einer korrespondierenden Spindelmutter kombiniert werden, sodass sich das Getriebe im Wesentlichen mit standardisierten Bauteilen herstellen und bedarfsabhängig relativ einfach austauschen lässt.

Die Gewindespindel lässt sich zudem auf einfache und flexible Weise an den Linearantrieb ankoppeln, insbesondere auch derart, dass wenigstens zwei Ausstoßkolben mittels jeweils einer Gewindespindel an einen gemeinsamen Linearantrieb gekoppelt sind. Die Gewindespindel kann beispielsweise drehbar an den Läufer eines Linearmotors oder an ein anderweitig angetriebenes und linear geführtes Koppelelement des Linearantriebs, beispielsweise einen Schlitten, gekoppelt sein.

Der Linearantrieb erzeugt ausschließlich eine oszillierende Hubbewegung, das Spindelgetriebe erzwingt daraus ausschließlich die überlagerte Drehbewegung des Ausstoßkolbens.

Der Ausstoßkolben kann auf prinzipiell bekannte Weise eine im Wesentlichen stirnseitig angeordnete und beispielsweise ringförmig ausgebildete Schneidkante umfassen, welche durch die beschriebene Kombination der Hubbewegung und der Drehbewegung des Ausstoßkolbens einen gezogenen Schnitt durch eine durch den Einlass zugeführte Produktmasse ausführt.

Vorzugsweise umfasst das Spindelgetriebe eine stationäre Spindelmutter zur Führung der Gewindespindel. Dies ermöglicht einen besonders einfachen und kostengünstigen Aufbau des Getriebes im Wesentlichen durch zwei standardisiert miteinander kombinierbare Bauteile. Zudem lässt sich ein solches Spindelgetriebe bei Bedarf kostengünstig austauschen, beispielsweise zur Anpassung der Drehbewegung an bestimmte Produktionsanforderungen durch Verwendung einer anderen Gewindesteigung.

Vorzugsweise ist die Spindelmutter dann am Füllrohr angeordnet und insbesondere an diesem befestigt. Dies ermöglicht eine kompakte und hygienisch vorteilhafte Ausführungsform des jeweiligen Schneidventils.

Vorzugsweise ist das Spindelgetriebe derart ausgebildet, dass es die Drehbewegung über den gesamten Arbeitshub des Ausstoßkolbens zum Abteilen und Ausstoßen erzwingt. Dies erleichtert nicht nur ein produktschonendes Abteilen von Portionen, sondern begünstigt zudem ein zuverlässiges und vollständiges Ausstoßen der abgetrennten Portionen am stirnseitigen Auslass des Füllrohrs. Hierzu erstreckt sich das Gewinde der Gewindespindel wenigstens über die gesamte Länge des Arbeitshubs.

Vorzugsweise ist die Gewindespindel eine Kugelgewindespindel, eine metrische Spindel, eine Trapenzspindel oder eine hygienegerecht gestaltete Sonderspindel. Kugelgewindespindeln sind bekanntermaßen Bestandteile von Kugelgewindetrieben, auch Kugelumlaufspindeln genannt, bei denen in der Spindelmutter kraftübertragende Kugeln umlaufen. Dies ermöglicht eine besonders präzise und verschleißarme Erzeugung der Drehbewegung. Die Spindelmuttem von metrischen Spindeln, Trapezspindeln oder hygienegerecht gestalteten Sonderspindeln sind demgegenüber besonders kompakt und kostengünstig.

Vorzugsweise hat die Gewindespindel eine Steigung von 2 mm bis 120 mm insbesondere von 40 mm bis 100 mm. Damit sind besonders praktikable gezogene Schnitte durch die Produktmasse möglich. Auch lässt sich das Abtrennen und Ausstoßen der erzeugten Portionen durch die so erzeugte Drehbewegung unterstützen.

Vorzugsweise umfasst der Linearantrieb ein in Hubrichtung geführtes und im Wesentlichen quer dazu verlaufendes Koppelelement, das beispielsweise in Form eines Trägers oder einer Leiste ausgebildet sein kann, zur translatorisch festen und dabei frei drehbaren Ankopplung der Gewindespindel und insbesondere von wenigstens zwei Gewindespindeln an den Linearantrieb. Dadurch lässt sich die Hubbewegung gegebenenfalls auch für mehrere Ausstoßkolben mit einem geringen technischen Aufwand synchron erzeugen. Das Koppelelement erstreckt sich dann beispielsweise orthogonal zur Hubrichtung zwischen wenigstens zwei in Hubrichtung verlaufenden Linearführungen für das Koppelelement.

Der Linearantrieb kann einen rotatorischen Motor und einen Kurbeltrieb zum oszillierenden Antrieb der Gewindespindel umfassen, beispielsweise indem das Koppelelement mittels einer Pleuelstange an eine von einem solchen Motor angetriebene Kurbelwelle gekoppelt ist. Somit kann die Hubbewegung des Ausstoßkolbens, insbesondere mehrerer Ausstoßkolben, mittels eines kontinuierlich arbeitenden rotatorischen Motors verschleiß- und vibrationsarm erzeugt werden.

Bei einer günstigen Ausführungsform umfasst die Schneidventil-Einheit wenigstens zwei Schneidventile, die über die jeweils zugeordneten Spindelgetriebe gemeinsam an den Linearantrieb gekoppelt sind. Insbesondere sind dann die Gewindespindeln der Spindelgetriebe mittels des Koppelelements an den Linearantrieb gekoppelt. Damit lässt sich der apparative Aufwand zum Antrieb der Ausstoßkolben insgesamt minimieren.

Bevorzugte Ausführungsformen sind in den Unteransprüchen angegeben.

Eine bevorzugte Ausführungsform der Erfindung ist zeichnerisch dargestellt. Es zeigen:
- Figur 1: ein Schneidventil mit dem Spindelgetriebe;
- Figur 2: eine Schneidventil-Einheit mit gemeinsam angetriebenen Schneidventilen; und
- Figur 3: eine Schneidventil-Einheit mit einem alternativen Antrieb der Schneidventile.

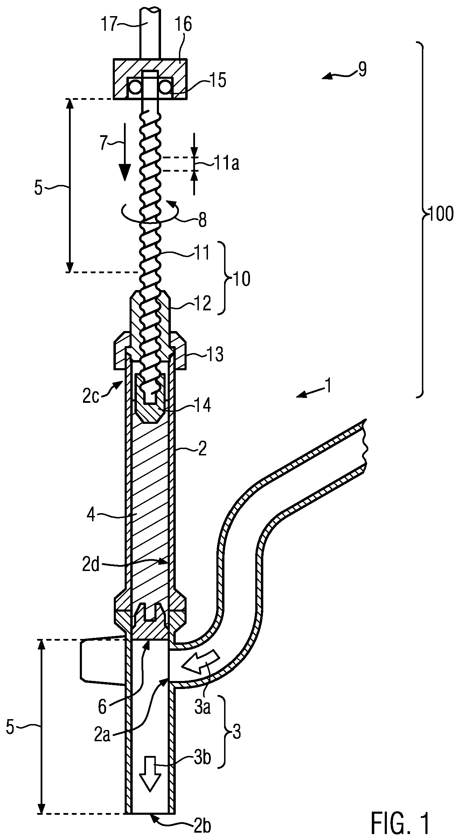

Wie die Figur 1 in einer schematischen Teilansicht einer Schneidventil-Einheit 100 erkennen lässt, umfasst das davon umfasste Schneidventil 1 ein Füllrohr 2 mit einem seitlichen Einlass 2a für einen Massestrang 3a einer pastösen Produktmasse 3 und einen Ausstoßkolben 4, der durch einen Arbeitshub 5 im Füllrohr 2 über den Einlass 2a oszillierend hin und her bewegt wird. Der Arbeitshub 5 kann dabei variabel gestaltet werden, sodass die Schneidkante 6 bündig, über das Füllrohr 2 hinaus oder innerhalb des Füllrohrs 2 am Ende des Arbeitshubs 5 stehen kann. Beim jeweiligen Vorwärts- bzw. Abwärtshub wird eine Portion 3b der Produktmasse 3 vom Massestrang 3a abgeteilt und durch einen stirnseitig am Füllrohr 2 ausgebildeten Auslass 2b ausgestoßen.

Der Ausstoßkolben 4 umfasst hierzu wenigstens eine stirnseitig an diesem ausgebildete Schneidkante 6, die durch Überlagerung einer Hubbewegung 7 und einer Drehbewegung 8 (der Übersichtlichkeit halber im oberen Bereich der Figur 1 dargestellt) des Ausstoßkolbens 4 entlang einer Schraubenlinie durch die Produktmasse 3 geführt wird und folglich einen gezogenen Schnitt beim Abtrennen der jeweiligen Portion 3b vom Massestrang 3a ausführt.

Dem Schneidventil 1 sind als Bestandteile der Schneidventil-Einheit 100 zudem ein Linearantrieb 9 zum Erzeugen der Hubbewegung 7 als auch ein Spindelgetriebe 10 zugeordnet, mit dem die Hubbewegung 7 vom Linearantrieb 9 an den Ausstoßkolben 4 übertragen und dabei gleichzeitig dessen Drehbewegung 8 erzwungen und somit der Hubbewegung 7 überlagert wird.

Das Spindelgetriebe 10 umfasst eine Gewindespindel 11, die einerseits mit dem Ausstoßkolben 4 sowohl drehfest als auch translatorisch fest bzw. starr, also in Richtung der Hubbewegung 7 festgelegt, und andererseits mit dem Linearantrieb 9 frei drehbar und translatorisch fest bzw. starr verbunden ist.

Das Spindelgetriebe 10 umfasst zudem eine feststehende Spindelmutter 12, welche die Gewindespindel 11 korrespondierend führt und aus der Hubbewegung 7 die Drehbewegung 8 ableitet. Die Spindelmutter 12 ist vorzugsweise am dem Auslass 2b entgegengesetzten Ende 2c des Füllrohrs 2 angeordnet und dort beispielsweise mittels einer Überwurfmutter 13 formschlüssig befestigt.

Die Gewindespindel 11 ist beispielsweise mittels einer formschlüssigen Kupplung 14 am Ausstoßkolben 4 sowohl translatorisch, also in Richtung der Hubbewegung 7, als auch rotatorisch festgelegt, um sowohl die Hubbewegung 7 als auch die Drehbewegung 8 der Gewindespindel 11 auf den Ausstoßkolben 4 zu übertragen.

Die Gewindespindel 11 kann als Kugelumlaufspindel, metrische Spindel, Trapezspindel oder hygienegerecht gestaltete Sonderspindel ausgebildet sein, die Spindelmutter 12 dann jeweils als dazu passendes Gegenstück.

Die Gewindespindel 11 hat beispielsweise eine Steigung 11a von 2 mm bis 120 mm, vorzugsweise von 40 mm bis 100 mm. Damit lässt sich das Verhältnis der Drehbewegung 8 zur Hubbewegung 7 sowohl zum Abtrennen der Portionen 3b vom Massestrang 3a als auch zum Ausstoßen der jeweiligen Portion 3b durch den Auslass 2b passend zur jeweiligen Produktkonsistenz vorteilhaft einstellen.

Wie die Figur 1 zudem schematisch erkennen lässt, kann das antriebsseitige Ende der Gewindespindel 11 mittels eines Lagers 15, das beispielsweise ein Gleitlager oder Wälzlager sein kann, frei drehbar und translatorisch festgelegt an einem in Richtung der Hubbewegung 7 oszillierenden Koppelelement 16 befestigt sein.

Das Koppelelement 16 ist dann ebenso wie wenigstens eine zugeordnete Linearführung 17 ein Bestandteil des Linearantriebs 9 für die Gewindespindel 11 und den Ausstoßkolben 4. Die wenigstens eine Linearführung 17 führt das Koppelelement 16 in fester Drehlage. Die Drehbewegung 8 wird somit ausschließlich vom Spindelgetriebe 10 erzeugt.

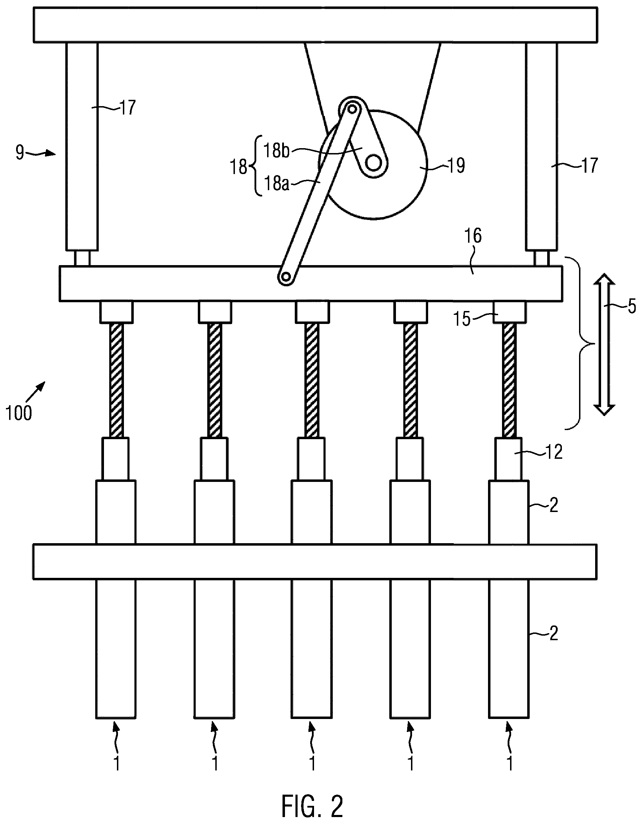

Wie die Figur 2 schematisch und nicht maßstäblich erkennen lässt, umfasst die Schneidventil-Einheit 100 vorzugsweise mehrere Schneidventile 1, und einen diesen gemeinsam zugeordneten Linearantrieb 9. Zur gegenseitigen Ankopplung umfasst dieser ein in fester Drehlage und in Hubrichtung, also in Richtung der Hubbewegung 7, linear geführtes und im Wesentlichen quer dazu verlaufendes Koppelelement 16, das beispielsweise als Querträger, Leiste oder dergleichen ausgebildet ist.

Die den einzelnen Schneidventilen 1 zugeordneten Gewindespindeln 11 sind hier jeweils mittels wenigstens eines Lagers 15 translatorisch fest und frei drehbar an das gemeinsame Koppelelement 16 und somit an den Linearantrieb 9 gekoppelt. Dadurch können sämtliche Ausstoßkolben 4 der Schneidventil-Einheit 100 vom Linearantrieb 9 gemeinsam in die Hubbewegung 7 versetzt werden, wobei dieser die Drehbewegung 8 mittels der einzelnen Spindelgetriebe 10 überlagert wird.

Der Linearantrieb 9 kann ferner einen Kurbeltrieb 18 mit einer Pleuelstange 18a zur Ankopplung des Koppelelements 16 und mit einer Kurbelwelle 18b sowie einen diese antreibenden rotatorischen Motor 19 umfassen. Die Kurbelwelle 18b rotiert im Arbeitsbetrieb kontinuierlich oder oszillierend und/oder wird direkt vom rotatorischen Motor 19 angetrieben. Dieser ist beispielsweise ein Elektromotor.

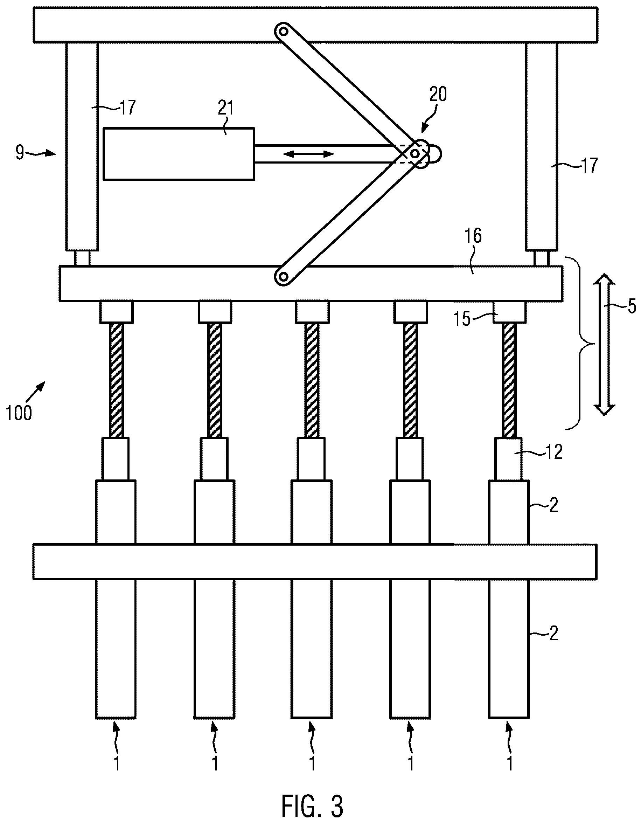

Wie die Figur 3 schematisch und nicht maßstäblich erkennen lässt, kann der Linearantrieb 9 stattdessen eine Kniehebelanordnung 20 umfassen, die beispielsweise von einem quer zur Hubbewegung 7 arbeitenden Linearaktor 21 linear bewegt wird.

Der Linearantrieb 9 kann beispielsweise zwei Linearführungen 17 zur beidseitigen Führung des Koppelelements 16 in Richtung der Hubbewegung 7 umfassen. Eine solche, in der Figur 2 prinzipiell dargestellte Konstruktion des Linearantriebs 9 ist vergleichsweise robust und vibrationsarm und ermöglicht zudem einen einfachen Synchronbetrieb mehrerer Schneidventile 1.

Prinzipiell könnte der Linearantrieb 9 aber auch einen Linearaktor 21, beispielsweise in Form eines Linearmotors (nicht dargestellt) umfassen, dessen Läufer in Richtung der Hubbewegung 7 arbeitet und der beispielsweise direkt mit dem Koppelelement 16 verbunden ist. Als Linearantrieb 9 sind beispielsweise auch Pneumatik- oder Hydraulikzylinder denkbar.

Prinzipiell wären auch individuelle Linearantriebe 9 für einzelne Schneidventile 1 denkbar.

Die dargestellte / beschriebene Ankopplung mehrerer Schneidventile 1 an einen gemeinsamen Linearantrieb 9 ist besonders effizient und zudem relativ einfach skalierbar, da beispielsweise lediglich die Anzahl der an das Koppelelement 16 angekoppelten Schneidventile 1 verändert und gegebenenfalls das Koppelelement 16 ausgetauscht werden muss. Die Schneidventil-Einheit 100 kann mit einer bestimmten Anzahl benötigter Schneidventile 1 so auf vergleichsweise einfache Weise modular aufgebaut werden.

Die Ausgestaltung des Ausstoßkolbens 4 samt stirnseitiger Schneidkante 6 sowie des Einlasses 2a und des Auslasses 2b des Füllrohrs 2 kann auf prinzipiell bekannte Weise erfolgen. Dies gilt ebenso für die Zufuhr des Massestrangs 3a der pastösen Produktmasse 3, die beispielsweise kontinuierlich oder die Portionierung unterstützend getaktet möglich ist.

Gegenüber dem bekannten Kulissengetriebe ermöglicht das Spindelgetriebe 10 eine vereinfachte und kompaktere Konstruktion des Füllrohrs 2. Beispielsweise kann die Lauffläche 2d des Füllrohrs 2 im Wesentlichen als einfache Zylinderbuchse ausgeführt werden kann, ohne Bedarf für dortige Getriebebestandteile wie Nuten, Hülsen oder dergleichen.

Die Spindelmutter 12 kann am dem Auslass 2b entgegengesetzten Ende 2c des Füllrohrs 2 mittels einer Überwurfmutter 13 oder dergleichen auf einfache und gut zugängliche Weise formschlüssig befestigt und bei Bedarf ausgetauscht werden, beispielsweise um die Drehbewegung 8 durch Verwendung einer Gewindespindel 11 mit anderer Steigung 11a anzupassen.

Der sich über den (gesamten) Arbeitshub 5 zum Abteilen und Ausstoßen von Portionen 3b der pastösen Produktmasse 3 erstreckende Getriebeteil befindet sich zudem in vorteilhafter Weise nicht am Füllrohr 2, sondern an der Kolbenstange des Ausstoßkolbens, die erfindungsgemäß von der Gewindespindel 11 gebildet wird.

## Patentansprüche

1. Schneidventil-Einheit (100) zum Portionieren von pumpfähigen pastösen bis flüssigen Produktmassen (3) mit insbesondere stückiger oder faseriger Konsistenz, wie Wurst- oder Schinkenmasse, Bäckereiprodukte, Molkereiprodukte, Feinkostprodukte, Fleischersatzprodukte und/oder Tiernahrung, mit:
- wenigstens einem Schneidventil (1) jeweils umfassend ein Füllrohr (2) mit seitlichem Einlass (2a) für einen Massestrang (3a) der Produktmasse und einen Ausstoßkolben (4), der durch einen Arbeitshub (5) im Füllrohr über den Einlass hinweg bewegt werden kann, um eine Portion (3b) der Produktmasse vom Massestrang abzuteilen und auszustoßen;
- einem Linearantrieb (9) zum Erzeugen einer Hubbewegung (7) des Ausstoßkolbens; und
- einem dem wenigstens einen Schneidventil jeweils zugeordneten Getriebe, das dazu ausgebildet ist, der Hubbewegung (7) eine Drehbewegung (8) des Ausstoßkolbens zu überlagern,
**dadurch gekennzeichnet, dass** das Getriebe ein Spindelgetriebe (10) ist umfassend eine Gewindespindel (11), die einerseits mit dem Ausstoßkolben rotatorisch und translatorisch festgelegt verbunden ist und andererseits mit dem Linearantrieb diesbezüglich drehbar und translatorisch festgelegt verbunden ist.

2. Schneidventil-Einheit nach Anspruch 1, wobei das Spindelgetriebe (10) eine feststehende Spindelmutter (12) zur die Drehbewegung (8) erzeugenden Führung der Gewindespindel (11) umfasst.

3. Schneidventil-Einheit nach Anspruch 2, wobei die Spindelmutter (12) am Füllrohr (2) angeordnet und insbesondere an diesem befestigt ist.

4. Schneidventil-Einheit nach wenigstens einem der vorigen Ansprüche, wobei das Spindelgetriebe (10) so ausgebildet ist, dass es die Drehbewegung (8) über den gesamten Arbeitshub (5) des Ausstoßkolbens (4) erzeugt.

5. Schneidventil-Einheit nach wenigstens einem der vorigen Ansprüche, wobei die Gewindespindel (11) eine Kugelgewindespindel, metrische Spindel, Trapezspindel oder eine hygienegerecht gestaltete Sonderspindel ist.

6. Schneidventil-Einheit nach wenigstens einem der vorigen Ansprüche, wobei die Gewindespindel (11) eine Steigung (11a) von 2 mm bis 120 mm aufweist, insbesondere von 40 mm bis 100 mm.

7. Schneidventil-Einheit nach wenigstens einem der vorigen Ansprüche, wobei der Linearantrieb (9) ein in Richtung der Hubbewegung (7) geführtes und quer dazu verlaufendes Koppelelement (16) umfasst, an welches die Gewindespindel (11) translatorisch festgelegt und drehbar gekoppelt ist.

8. Schneidventil-Einheit nach Anspruch 7, wobei das Koppelelement (16) in Form eines Querträgers ausgebildet ist.

9. Schneidventil-Einheit nach Anspruch 7 oder 8, wobei das Koppelelement (16) zur translatorisch festgelegten und jeweils separat drehbaren Ankopplung von wenigstens zwei Gewindespindeln (11) ausgebildet ist.

10. Schneidventileinheit nach wenigstens einem der vorigen Ansprüche, wobei der Linearantrieb (9) einen rotatorischen Motor (19) und einen Kurbeltrieb (18) zum linear oszillierenden Antrieb der Gewindespindel (11) umfasst.

11. Schneidventil-Einheit nach Anspruch 10 und wenigstens einem der Ansprüche 7 bis 9, wobei der Kurbeltrieb (18) eine Pleuelstange (18a) zur antriebstechnischen Ankopplung am Koppelement (16) umfasst.

12. Schneidventil-Einheit nach wenigstens einem der vorigen Ansprüche, umfassend wenigstens zwei Schneidventile (1), die über die ihnen zugeordneten Spindelgetriebe (10) gemeinsam an den Linearantrieb (9) gekoppelt sind.

13. Schneidventil-Einheit nach Anspruch 9 und 12, wobei die Gewindespindeln (11) der Spindelgetriebe (10) mittels des Koppelelements (16) an den Linearantrieb (9) gekoppelt sind.

## Claims

1. A cutting valve unit (100) for portioning pumpable pasty or liquid product masses (3), in particular having lumpy or fibrous consistence such as sausage or ham mass, bakery products, dairy products, delicatessen products, meat substitute products and/or pet food, comprising:
- at least one cutting valve (1) respectively comprising a filling pipe (2) having a lateral inlet (2a) for an extruded strand (3a) of the product mass and a discharge piston (4) movable through a working stroke (5) within the filling pipe beyond the inlet for severing and discharging a portion (3b) of the product mass from the strand;
- a linear drive (9) for producing a stroke movement (7) of the discharge piston; and
- a transmission associated with the at least one cutting valve, configured to superimpose the stroke movement (7) with a rotary movement (8) of the discharge piston,
**characterized in that** the transmission is a screw drive (10) comprising a leadscrew (11) rotationally and translationally fixed to the discharge piston on the one hand and rotationally and translationally fixed to the linear drive on the other hand.

2. The cutting valve unit according to claim 1, wherein the screw drive (10) comprises a stationary ball nut (12) for guiding the lead screw (11) to produce the rotary movement (8).

3. The cutting valve unit according to claim 2, wherein the ball nut (12) is disposed on the filling pipe (2) and in particular fixed thereto.

4. The cutting valve unit according to at least one of the preceding claims, wherein the screw drive (10) is configured to produce the rotary movement (8) over the entire working stroke (5) of the discharge piston (4).

5. The cutting valve unit according to at least one of the preceding claims, wherein the lead screw (11) is a ball screw, a metric screw, a trapezoidal screw or a special hygienic-conform screw.

6. The cutting valve unit according to at least one of the preceding claims, wherein the lead screw (11) has a pitch (11a) of 2 mm to 120 mm, in particular of 40 mm to 100 mm.

7. The cutting valve unit according to at least one of the preceding claims, wherein the linear drive (9) comprises a coupling element (16) guided along the direction of the stroke movement (7) and extending transverse thereto, to which the lead screw (11) is translationally fixed and rotatably coupled.

8. The cutting valve unit according to claim 7, wherein the coupling element (16) is configured as a crossbar.

9. The cutting valve unit according to claims 7 or 8, wherein the coupling element (16) is configured for translationally fixed and separately rotatable coupling to at least two lead screws (11).

10. The cutting valve unit according to at least one of the preceding claims, wherein the linear drive (9) comprises a rotary motor (19) and a crank mechanism (18) for a linearly oscillating drive of the lead screw (11).

11. The cutting valve unit according to claim 10 and at least one of claims 7 through 9, wherein the crank mechanism (18) comprises a connecting rod (18a) for drivingly coupling to the coupling element (16).

12. The cutting valve unit according to at least one of the preceding claims, comprising at least two cutting valves (1) jointly coupled to the linear drive (9) via the screw drives (10) associated therewith.

13. The cutting valve unit according to claims 9 and 12, wherein the lead screws (11) of the screw drives (10) are coupled to the linear drive (9) by means of the coupling element (16).

## Revendications

1. Unité de vanne de coupe (100) permettant de portionner des masses de produit (3) pompables, de pâteux jusqu'à liquides, en particulier de consistance grumeleuse ou fibreuse, telles que des masses de saucisse ou de jambon, des produits de boulangerie, des produits laitiers, des produits de charcuterie, des substituts de viande et/ou des aliments pour animaux, comprenant :
- au moins une vanne de coupe (1) comprenant respectivement un tuyau de remplissage (2) avec une entrée latérale (2a) pour un cordon de masse (3a) de la masse de produit et un piston d'éjection (4) qui peut être déplacé à travers l'entrée par une course de travail (5) au sein du tuyau de remplissage afin de séparer et d'éjecter une portion (3b) de la masse de produit à partir du cordon de masse ;
- un actionneur linéaire (9) permettant de générer un mouvement de levage (7) du piston d'éjection ; et
- un engrenage associé respectivement à la au moins une vanne de coupe et conçu pour superposer un mouvement de rotation (8) du piston d'éjection au mouvement de levage (7),
**caractérisée en ce que** l'engrenage est un engrenage à broche (10) comprenant une broche filetée (11) qui, d'une part, est reliée au piston d'éjection de manière fixe en rotation et en translation et, d'autre part, est reliée à l'entraînement linéaire de manière rotative et fixe en translation par rapport audit entraînement linéaire.

2. Unité de vanne de coupe selon la revendication 1, dans laquelle l'engrenage à broche (10) comprend un écrou de broche (12) fixe permettant un guidage, avec génération du mouvement de rotation (8), de la broche filetée (11).

3. Unité de vanne de coupe selon la revendication 2, dans laquelle l'écrou de broche (12) est agencé au niveau du tuyau de remplissage (2) et est en particulier fixé à celui-ci.

4. Unité de vanne de coupe selon au moins l'une quelconque des revendications précédentes, dans laquelle l'engrenage à broche (10) est conçu de manière à générer le mouvement de rotation (8) sur la totalité de la course de travail (5) du piston d'éjection (4).

5. Unité de vanne de coupe selon au moins l'une quelconque des revendications précédentes, dans laquelle la broche filetée (11) est une broche filetée à billes, une broche métrique, une broche trapézoïdale ou une broche spéciale de conception hygiénique.

6. Unité de vanne de coupe selon au moins l'une quelconque des revendications précédentes, dans laquelle la broche filetée (11) présente un pas (11a) compris entre 2 mm et 120 mm, en particulier compris entre 40 mm et 100 mm.

7. Unité de vanne de coupe selon au moins l'une quelconque des revendications précédentes, dans laquelle l'entraînement linéaire (9) comprend un élément de couplage (16), guidé dans la direction du mouvement de levage (7) et s'étendant transversalement par rapport à celui-ci, au niveau duquel la broche filetée (11) est couplée de manière rotative et de manière fixe en translation.

8. Unité de vanne de coupe selon la revendication 7, dans laquelle l'élément de couplage (16) est réalisé sous la forme d'une traverse.

9. Unité de vanne de coupe selon la revendication 7 ou 8, dans laquelle l'élément de couplage (16) est réalisé en vue d'un couplage, fixe en translation et, de manière respectivement séparée, rotatif, d'au moins deux broches filetées (11).

10. Unité de vanne de coupe selon au moins l'une quelconque des revendications précédentes, dans laquelle l'entraînement linéaire (9) comprend un moteur rotatif (19) et un entraînement à manivelle (18) permettant un entraînement oscillant linéaire de la broche filetée (11).

11. Unité de vanne de coupe selon la revendication 10 et au moins l'une quelconque des revendications 7 à 9, dans laquelle l'entraînement à manivelle (18) comprend une bielle (18a) permettant un couplage en entraînement à l'élément de couplage (16).

12. Unité de vanne de coupe selon au moins l'une quelconque des revendications précédentes, comprenant au moins deux vannes de coupe (1) qui sont couplées ensemble à l'entraînement linéaire (9) par l'intermédiaire des engrenages à broche (10) qui leur sont associés.

13. Unité de vanne de coupe selon les revendications 9 et 12, dans laquelle les broches filetées (11) des engrenages à broche (10) sont couplées à l'entraînement linéaire (9) au moyen de l'élément d'accouplement (16).
